# EUROPÄISCHE PATENTSCHRIFT

(11) **EP 1 927 173 B1**
(45) Veröffentlichungstag und Bekanntmachung des Hinweises auf die Patenterteilung: **28.08.2013**
(21) Anmeldenummer: 06793592.4
(22) Anmeldetag: 18.09.2006
(51) Int. Cl.: H02G 5/02, H02B 1/20

(54) **SAMMELSCHIENENANORDNUNG FÜR EINE ELEKTRISCHE SCHALTANLAGE IN DOPPELFRONTBAUWEISE**
BUSBAR SYSTEM FOR A DOUBLE-FRONT ELECTRICAL SWITCHGEAR
ENSEMBLE BARRE COLLECTRICE POUR UNE INSTALLATION DE DISTRIBUTION ELECTRIQUE A DOUBLE FACE DE COMMANDE

(30) Priorität: 23.09.2005 DE 102005047690
(43) Veröffentlichungstag der Anmeldung: 04.06.2008
(73) Patentinhaber: Siemens Aktiengesellschaft, 80333 München (DE)
(72) Erfinder: SCHMIDT, Mario, 04178 Leipzig (DE); ZICKMANTEL, Mathias, 04329 Leipzig (DE)
(86) Internationale Anmeldenummer: PCT/EP2006/066451
(87) Internationale Veröffentlichungsnummer: WO 2007/033947

(56) Entgegenhaltungen:
- DE-U1- 29 706 564
- US-A- 4 199 655

## Beschreibung

Die Erfindung betrifft eine Sammelschienenanordnung für eine elektrische Schaltanlage in Doppelfrontbauweise, insbesondere eine Niederspannungsschaltanlage.

Niederspannungsschaltanlagen werden seit einiger Zeit nicht nur als Einfrontanordnung, sondern auch als Döppelfrontanordnung ausgeführt. Die Doppelfrontanordnung ist so aufgebaut, dass die Anlage sowohl an der Vorderseite (vorn), als auch an der Rückseite (hinten) eine Bedienfront aufweist. Darüber hinaus weist die Doppelfrontanordnung ein gemeinsames Sammelschienensystem auf. Die Anbindungen der Feldschienen erfolgen dabei von vorn als auch von hinten an die gemeinsame, mittig liegende Sammelschiene.

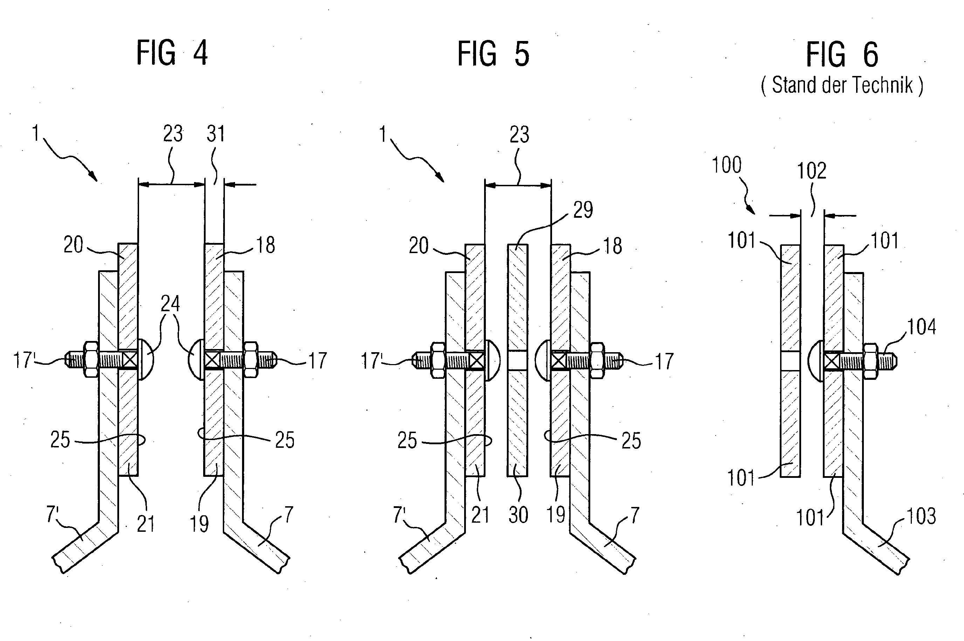

Bei mehrphasigen Sammelschienenanordnungen kommen oft Phasenschienen zum Einsatz, die in mehrere (zumeist zwei oder vier), Teilleiter unterteilt sind. Im Niederspannungsbereich wird eine solche Unterteilung meist genutzt, um die Wirbelstromverluste zu reduzieren. Bei den bisher bekannten Sammelschienenanordnungen 100 mit vier im Rechteck angeordneten Teilleitern 101 und einem Abstand 102 der Teilleiter von etwa 10 mm mussten stets die verschiedenen Anbindungsmöglichkeiten von vorn und hinten berücksichtigt werden, um beim Anschluss von Feldschienen 103 an die Sammelschiene eine Kollision der Anschlussschrauben 104 zu vermeiden, vgl. FIG 6. Für einen gleichzeitigen Anschluss von Geräten an die Sammelschiene von vorn und hinten war eine komplexe Systematik notwendig.

Eine Aufgabe der vorliegenden Erfindung ist es, eine Lösung für eine Doppelfrontanordnung zu finden, bei der die Anschlüsse von vorn und hinten nicht kollidieren und zugleich eine verbesserte Stromverteilung in den Teilleitern je Phase erreicht wird.

Diese Aufgabe wird durch eine Sammelschienenanordnung nach Anspruch 1 gelöst. Danach ist es vorgesehen, dass die Sammelschiene, die von wenigstens einem Sammelschienenhalter gehalten wird, wenigstens zwei erste (vordere) Teilleiter und wenigstens zwei zweite (hintere) Teilleiter aufweist, wobei der Abstand zwischen den ersten Teilleitern und den zweiten Teilleitern mindestens der zweifachen Dicke eines Teilleiters entspricht. Der Abstand ist also größer oder gleich der zweifachen Dicke eines Teilleiters. Dabei sind die ersten und zweiten Teilleiter der Sammelschiene vorzugsweise jeweils quer zur Sammelschienenlängsrichtung fluchtend zueinander angeordnet und weisen die gleiche Dicke (hier vorzugsweise 10 mm) auf.

Eine Grundidee der Erfindung besteht darin, den Abstand zwischen den vorderen und hinteren Teilleitern zu erhöhen. So kann der vergrößerte Zwischenraum zwischen den vorderen und hinteren Teilleitern für Anschlüsse nach vorn und nach hinten genutzt werden, ohne dass es zu Kollisionen der Verbindungselemente (vorzugsweise Anschlussschrauben) kommt. Der gleichzeitige Anschluss von Geräten an die Sammelschiene von vorn und hinten ist damit äußerst einfach durchführbar.

Durch den gegenüber herkömmlichen Systemen größeren Abstand zwischen den vorderen und hinteren Teilleitern (hier vorzugsweise mindestens 20 mm), verbessert sich darüber hinaus durch den Skineffekt und den Proximityeffekt auch die Stromverteilung in den Teilleitern je Phase. Mit anderen Worten ist die Stromverteilung auf die Teilleiter in einer Phase sehr homogen und auch der übertragbare Strom je Querschnittseinheit ist vergleichsweise hoch.

Die beschriebene Sammelschienenanordnung mit vier weit voneinander beabstandeten Teilleitern kann insbesondere bei geringen Bemessungsströmen für das Sammelschienensystem verwendet werden. Je nach der Höhe des jeweils geforderten Stromes kann somit der Materialbedarf (insbesondere an Kupfer) gering gehalten werden.

Vorteilhafte Ausgestaltungen der Erfindung sind in den Unteransprüchen angegeben.

Insbesondere bei höheren Bemessungsströmen für das Sammelschienensystem hat es sich als besonders vorteilhaft erwiesen, dass die Sammelschiene zwischen den ersten Teilleitern und den zweiten Teilleitern wenigstens zwei dritte (mittlere) Teilleiter aufweist. Dabei ist vorzugsweise ein Abstand zwischen den ersten Teilleitern und den zweiten Teilleitern vorgesehen, der mindestens der dreifachen Dicke eines Teilleiters entspricht (hier vorzugsweise mindestens 30 mm). Der Abstand ist also größer oder gleich der dreifachen Dicke eines Teilleiters.

Hierdurch verbessert sich die Stromverteilung nochmals. Insgesamt kann durch die gleichmäßigere Stromaufteilung bei einer solchen Teilleiteranordnung Schienenmaterial (insbesondere Kupfer) eingespart werden. Darüber hinaus wird ein im Vergleich zu bekannten Lösungen höherer Bemessungsstrom der Sammelschiene bei Doppelfrontanordnung möglich. Die Querschnitte je Phase können für Bemessqngsströme über 3500 A ausgelegt werden.

Auch die einfache Anschlusssystematik wird bei drei Teilleiterpaaren mit den gleichen Anbindungsebenen beibehalten. Vorzugsweise liegen nämlich auch hier die Schraubenköpfe an den aufeinander zu weisenden Innenseiten der vorderen und hinteren Teilleiter an. So sind die Schraubenköpfe der Anschlussschrauben für die Anschlüsse von vorn zwischen den vorderen und den mittleren Teilleitern angeordnet, während die Schraubenköpfe der Anschlussschrauben für die Anschlüsse von hinten zwischen den mittleren und den hinteren Teilleitern angeordnet sind.

Die erfindungsgemäße Sammelschienenanordnung ist vorzugsweise derart ausgebildet, dass die ersten Anschlussschrauben zur Herstellung einer Verbindung zwischen einer Feldschiene und den vorderen Teilleitern zu den zweiten Anschlussschrauben zur Herstellung einer Verbindung zwischen einer Feldschiene und den hinteren Teilleitern montierbar beliebig angeordnet sein können. Sie können beispielsweise nicht fluchtend oder aber auch fluchtend zueinander angeordnet sein. Mit anderen Worten ermöglicht der vergrößerte Abstand zwischen den vordern und hinteren Teilleitern eine Montage der Feldschienen derart, dass die Anschlussschrauben auf einer Höhe und versetzt zueinander oder aber fluchtend montiert werden können. Da nicht mehr - wie aus dem Stand der Technik bekannt - ein einzige Anschlussschraube verwendet wird, um die Feldschienen an die Sammelschiene anzuschließen, sondern erfindungsgemäß zwei voneinander unabhängig Anschlussschrauben, ist der vordere von dem hinteren Anschluss entkoppelt.

Als Anschlussschrauben können Flachrundschrauben mit Vierkantansatz nach DIN 603 verwendet werden. Besonders vorteilhaft für eine schnelle und sichere Montage hat es sich jedoch erwiesen, wenn als Anschlussschrauben Hammerschrauben mit Vierkantansatz nach DIN 186 zum Einsatz kommen. Dies bietet gegenüber den Flachrundschrauben mit Vierkantansatz den Vorteil, dass die Schraube in den Freiraum zwischen den Teilleitern einer bereits fertig montierten Anordnung von vorn oder hinten eingeführt und in dem Freiraum um 90° gedreht werden kann. Mit anderen Worten verdreht sich die Schraube bei einem Anziehen der Mutter nicht, da sich der Vierkantansatz zwischen den Teilleitern befindet.

Werden die Teilleiter der Sammelschiene in der Nähe der Feldschienenanschlüsse über vorzugsweise eingeschraubte Zwischenstücke miteinander verbunden, so wie das in einer weiteren bevorzugten Ausführungsform der Erfindung vorgesehen ist, so kann auf einfache Art und Weise ein Stromausgleich zwischen vorderen bzw. hinteren Teilleitern mit den mittleren Teilleitern hergestellt werden, ohne dass es zu einer Kollision zwischen vorderen und hinteren Anschlüssen kommt. Die Zwischenstücke sind dabei vorteilhafterweise ebenfalls aus Schienenmaterial (insbesondere Kupfer) gefertigt.

Das Dokument DE 297 06 564 offenbart eine Anordnung gemäss dem Oberbegriff des Anspruchs 1.

Die Erfindung wird nachfolgend anhand von Ausführungsbeispielen beschrieben, die mit Hilfe von Zeichnungen näher erläutert werden. Hierbei zeigen in vereinfachten, z. T. schematischen Darstellungen:
- FIG 1: einen Schaltschrank in Doppelfrontbauweise,
- FIG 2: eine Sammelschiene mit zwei Teilleiterpaaren (perspektivisch),
- FIG 3: eine Sammelschiene mit drei Teilleiterpaaren (perspektivisch),
- FIG 4: eine Sammelschiene mit zwei Teilleiterpaaren (Schnitt IV-IV in FIG 2),
- FIG 5: eine Sammelschiene mit drei Teilleiterpaaren (Schnitt V-V in FIG 3) und
- FIG 6: eine Sammelschiene mit zwei Teilleiterpaaren nach dem Stand der Technik (im Schnitt).

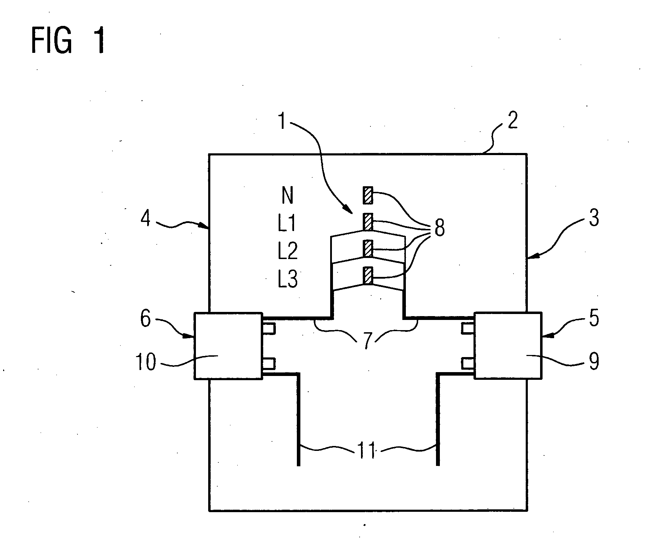

FIG 1 zeigt eine Sammelschienenanordnung 1 für eine Schaltanlage, also eine Anlage, in der die Verteilung elektrischer Energie erfolgt, für Niederspannung. Die Schaltanlage umfasst mehrere Schaltschränke 2. Sie ist als Doppelfrontanordnung ausgeführt. Das bedeutet, dass die Anlage sowohl an der Vorderseite 3 (vorn), als auch an der Rückseite 4 (hinten) eine Bedienfront 5, 6 aufweist. Darüber hinaus weist die Doppelfrontanordnung ein gemeinsames Sammelschienensystem (N, L1, L2, L3) auf. Die Anbindungen der Feldschienen 7 erfolgen dabei von vorn als auch von hinten an die gemeinsame, mittig liegende Sammelschiene 8 (Hauptsammelschiene). An die Feldschienen sind Schaltgeräte 9, 10 angeschlossen, deren Bedienfront 5, 6 jeweils aus der Vorderseite 3 bzw. Rückseite 4 des Schaltschrankes 2 zu Bedienzwecken herausragen. Von den Schaltgeräten 9, 10 gehen weitere Anschlussschienen 11 zu weiteren Geräten (nicht dargestellt) im Schaltschrank 2.

Unter einem Sammelschienensystem wird dabei eine Anzahl schienenförmiger Stromleiter in solcher Anzahl und Anordnung verstanden, wie sie zum Energietransport in ein- oder mehrphasigen Netzen benötigt werden. Die vorliegende Erfindung ist mit anderen Worten nicht nur auf Sammelschienen im eigentlichen Wortsinn beschränkt. Die Erfindung ist vielmehr bei jeder Art von Stromschiene anwendbar.

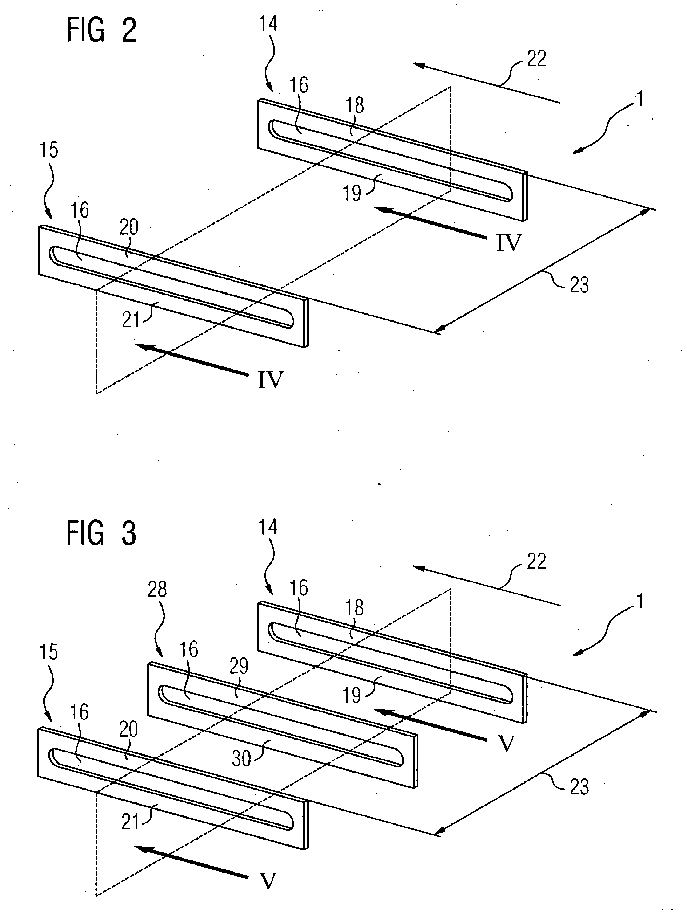

FIG 2 zeigt eine einzelne Sammelschiene 8 der Sammelschienenanordnung. Der Sammelschienenhalter ist aus Gründen der Übersichtlichkeit nicht mit dargestellt. Er befindet sich vorzugsweise an wenigstens einem der Freienden der Sammelschiene 8. Im Beispiel wird die Sammelschiene L1 dargestellt. Diese Sammelschiene 8 weist zwei Stromschienen 14, 15 aus Kupfer auf, die jeweils mittig ein Langloch 16 zur Montage der Feldschienen 7, 7' mittels Anschlussschrauben 17, 17' aufweisen. Dadurch ergeben sich insgesamt zwei Teilleiterpaare, wie in FIG 4 dargestellt. Das erste Teilleiterpaar umfasst dabei die oberhalb und unterhalb des Langloches 16 der ersten Stromschiene 14 ausgebildeten Teilleiter 18, 19 und das zweite Teilleiterpaar umfasst die oberhalb und unterhalb des Langloches 16 der zweiten Stromschiene 15 ausgebildeten Teilleiter 20, 21. Die vorderen Teilleiter 18, 19 und die hinteren Teilleiter 20, 21 der Sammelschiene 8 verlaufen dabei jeweils quer zur Sammelschienenlängsrichtung 22 fluchtend zueinander. Der Abstand 23 zwischen den vorderen Teilleitern 18, 19 und den hinteren Teilleitern 20, 21 entspricht dabei der dreifachen Dicke eines Teilleiters 18, 19, 20, 21. Im vorliegenden Fall beträgt die Dicke 31 eines Teilleiters 10 mm (vgl. FIG 4) und der Abstand 23 zwischen den vorderen Teilleitern 18, 19 und den hinteren Teilleitern 20, 21 beträgt 30 mm.

Die Feldschienen 7, 7' sind durch Anschlussschrauben 17, 17' mit den vorderen und hinteren Teilleitern 18, 19, 20, 21 verbunden. Als Anschlussschrauben 17, 17' werden Flachrundschrauben mit Vierkantansatz nach DIN 603 verwendet. Die Anschlussschrauben 17, 17' liegen dabei zwischen den beiden vorderen Teilleitern 18, 19 bzw. den beiden hinteren Teilleitern 20, 21 in den entsprechenden Langlöchern 16 ein und mit ihren Schraubenköpfen 24 an den aufeinander zu weisenden Innenseiten 25 der vorderen und hinteren Teilleiter 18, 19, 20, 21 an. Die vorderen Anschlussschrauben 17 sind dabei zu den hinteren Anschlussschrauben 17' versetzt montierbar.

FIG 3 zeigt eine einzelne Sammelschiene der Sammelschienenanordnung in einer weiteren Ausführung. Im Beispiel wird wiederum die Sammelschiene L1 dargestellt. Diese Sammelschiene weist drei Stromschienen 14, 15, 26 aus Kupfer auf. Diese weisen wiederum jeweils mittig ein Langloch 16 zur Montage der Feldschienen 7, 7' mittels Anschlussschrauben 17, 17' auf. Somit ergeben sich insgesamt drei Teilleiterpaare. Das vordere und das hintere Teilleiterpaar ist ausgebildet wie in FIG 2 dargestellt. Das dritte, mittlere Teilleiterpaar umfasst dabei die oberhalb und unterhalb des Langloches 16 der dritten, mittleren Stromschiene 28 ausgebildeten Teilleiter 29, 30. Die vorderen, mittleren und hinteren Teilleiter 18, 19, 20, 21, 29, 30 der Sammelschiene verlaufen dabei jeweils quer zur Sammelschienenlängsrichtung 22 fluchten zueinander, wie in FIG 5 dargestellt. Der Abstand 23 zwischen den vorderen Teilleitern 18, 19 und den hinteren Teilleitern 20, 21 entspricht dabei der dreifachen Dicke eines Teilleiters, hier 30 mm, wobei die mittlere Stromschiene 28 genau in der Mitte zwischen den äußeren Stromschienen 14, 15 angeordnet ist.

Der Anschluss der Feldschienen 7, 7' erfolgt wie oben beschrieben.

Vorzugsweise sind die vorderen mit den hinteren Teilleitern (bei zwei Teilleiterpaaren) bzw. die vorderen mit den mittleren Teilleitern und die mittleren mit den hinteren Teilleitern (bei drei Teilleiterpaaren) in der Nähe der Feldschienenanschlüsse über eingeschraubte Zwischenstücke aus Kupfer (nicht abgebildet) miteinander verbunden.

In diesem Zusammenhang sei darauf hingewiesen, dass die Abstände 23 zwischen den einzelnen Teilleiterpaaren in den FIG 2 und 3 nicht maßstabsgemäß, sondern aus Gründen der Übersichtlichkeit stark vergrößert dargestellt sind.

### Bezugszeichenliste

- 1: Sammelschienenanordnung
- 2: Schaltschrank
- 3: Vorderseite
- 4: Rückseite
- 5: Bedienfront vorn
- 6: Bedienfront hinten
- 7: Feldschiene
- 8: Sammelschiene
- 9: Schaltgerät vorn
- 10: Schaltgerät hinten
- 11: Anschlussschiene
- 12: (frei)
- 13: (frei)
- 14: Stromschiene
- 15: Stromschiene
- 16: Langloch
- 17: Anschlussschraube
- 18: vorderer Teilleiter
- 19: vorderer Teilleiter
- 20: hinterer Teilleiter
- 21: hinterer Teilleiter
- 22: Sammelschienenlängsrichtung
- 23: Abstand
- 24: Schraubenkopf
- 25: Innenseite
- 26: (frei)
- 27: (frei)
- 28: Stromschiene
- 29: mittlerer Teilleiter
- 30: mittlerer Teilleiter
- 31: Teilleiterdicke
- 100: Sammelschienenanordnung
- 101: Teilleiter
- 102: Abstand
- 103: Feldschiene
- 104: Anschlussschraube

## Patentansprüche

1. Sammelschienenanordnung (1) für eine elektrische Schaltanlage in Doppelfrontbauweise, insbesondere eine Niederspannungsschaltanlage, mit wenigstens einer Sammelschiene (8),
die von wenigstens einem Sammelschienenhalter gehalten wird, wobei die Sammelschiene (8) wenigstens zwei erste Teilleiter (18, 19) und wenigstens zwei zweite Teilleiter (20, 21) aufweist, **dadurch gekennzeichnet, dass** der Abstand (23) zwischen den ersten Teilleitern (18, 19) und den zweiten Teilleitern (20, 21) mindestens der zweifachen Dicke (31) eines Teilleiters entspricht.

2. Sammelschienenanordnung (1) nach Anspruch 1,
**dadurch gekennzeichnet,**
**dass** die Sammelschiene (8) zwischen den ersten Teilleitern (18, 19) und den zweiten Teilleitern (20, 21) wenigstens zwei dritte Teilleiter (29, 30) aufweist.

3. Sammelschienenanordnung (1) nach Anspruch 1 oder 2,
**dadurch gekennzeichnet,**
**dass** an den ersten und/oder zweiten Teilleitern (18, 19, 20, 21) der Sammelschiene (8) mit Hilfe einer Anzahl von Anschlussschrauben (17) eine Feldschiene (7) angebracht ist,
wobei die Schraubenköpfe (24) an den aufeinander zu weisenden Innenseiten (25) dieser Teilleiter (18, 19, 20, 21) angeordnet sind.

4. Sammelschienenanordnung (1) nach einem der Ansprüche 1 bis 3,
**dadurch gekennzeichnet,**
**dass** die Verbindung zwischen einer Feldschiene (7) und den ersten Teilleitern (18, 19) mit einer Anzahl erster Anschlussschrauben (17) und die Verbindung zwischen einer Feldschiene (7') und den zweiten Teilleitern (20, 21) mit einer Anzahl zweiter Anschlussschrauben (17') hergestellt ist.

5. Sammelschienenanordnung (1) nach Anspruch 3 oder 4, **dadurch gekennzeichnet,**
**dass** die Anschlussschrauben (17, 17') Hammerschrauben mit Vierkantansatz sind.

6. Sammelschienenanordnung (1) nach einem der Ansprüche 1 bis 5,
**dadurch gekennzeichnet,**
**dass** die Teilleiter (18, 19, 20, 21) der Sammelschiene (8) in der Nähe der Feldschienenanschlüsse über Zwischenstücke zum Stromausgleich zwischen den Teilleitern (18, 19, 20, 21) miteinander verbindbar sind.

## Claims

1. A busbar arrangement (1) for an electrical switchgear assembly of double-front design, in particular a low-voltage switchgear assembly, having at least one busbar (8) which is held by at least one busbar holder,
with the busbar (8) having at least two first conductor elements (18, 19) and at least two second conductor elements (20, 21), **characterized in that** the distance (23) between the first conductor elements (18, 19) and the second conductor elements (20, 21) corresponds to at least twice the thickness (31) of one conductor element.

2. Busbar arrangement (1) according to Claim 1, **characterized**
**in that** the busbar (8) has at least two third conductor elements (29, 30) between the first conductor elements (18, 19) and the second conductor elements (20, 21).

3. Busbar arrangement (1) according to Claim 1 or 2, **characterized**
**in that** a field rail (7) is fitted to the first and/or second conductor elements (18, 19, 20, 21) of the busbar (8) using a number of connection bolts (17), with the bolt heads (24) being arranged on the mutually facing inner faces (25) of these conductor elements (18, 19, 20, 21).

4. Busbar arrangement (1) according to one of Claims 1 to 3, **characterized**
**in that** the connection between a field rail (7) and the first conductor elements (18, 19) is produced by a number of first connection bolts (17), and the connection between a field rail (7') and the second conductor elements (20, 21) is produced by a number of second connection bolts (17').

5. Busbar arrangement (1) according to Claim 3 or 4, **characterized**
**in that** the connection bolts (17, 17') are T-head bolts with a square neck.

6. Busbar arrangement (1) according to one of Claims 1 to 5, **characterized**
**in that** the conductor elements (18, 19, 20, 21) of the busbar (8) can be connected to one another in the vicinity of the field rail connections by means of intermediate pieces for current compensation between the conductor elements (18, 19, 20, 21).

## Revendications

1. Ensemble barre collectrice (1) pour installation de distribution électrique à double façade, notamment une installation basse tension, comprenant au moins une barre collectrice (8) qui est supportée par au moins un support de barre collectrice, la barre collectrice (8) comprenant au moins deux premiers sous-conducteurs (18, 19) et au moins deux deuxièmes sous-conducteurs (20, 21), **caractérisé en ce que** la distance (23) entre les premiers sous-conducteurs (18, 19) et les deuxièmes sous-conducteurs (20, 21) correspond au moins au double de l'épaisseur (31) d'un sous-conducteur.

2. Ensemble barre collectrice (1) selon la revendication 1, **caractérisé en ce que** la barre collectrice (8) comprend au moins deux troisièmes sous-conducteurs (29, 30) entre les premiers sous-conducteurs (18, 19) et les deuxièmes sous-conducteurs (20, 21).

3. Ensemble barre collectrice (1) selon la revendication 1 ou 2, **caractérisé en ce qu'**une barre de tableau (7) est installée sur les premiers et/ou deuxièmes sous-conducteurs (18, 19, 20, 21) de la barre collectrice (8) à l'aide d'un nombre de vis de raccordement (17), les têtes des vis (24) étant situées sur les côtés intérieurs (25) de ces sous-conducteurs (18, 19, 20, 21) tournés l'un vers l'autre.

4. Ensemble barre collectrice (1) selon l'une des revendications 1 à 3, **caractérisé en ce que** le raccordement entre une barre de tableau (7) et les premiers sous-conducteurs (18, 19) est réalisé avec un nombre de premières vis de raccordement (17) et le raccordement entre une barre de tableau (7') et les deuxièmes sous-conducteurs (20, 21) est réalisé avec un nombre de secondes vis de raccordement (17').

5. Ensemble barre collectrice (1) selon la revendication 3 ou 4, **caractérisé en ce que** les vis de raccordement (17, 17') sont des vis à tête rectangulaire à collet carré.

6. Ensemble barre collectrice (1) selon l'une des revendications 1 à 5, **caractérisé en ce que** les sous-conducteurs (18, 19, 20, 21) de la barre collectrice (8) peuvent être connectés les uns aux autres au voisinage des raccordements avec la barre de tableau par le biais de pièces intermédiaires pour l'équilibrage de courant entre les sous-conducteurs (18, 19, 20, 21).
